# EUROPEAN PATENT SPECIFICATION

(11) **EP 3 411 195 B1**
(45) Date of publication and mention of the grant of the patent: **31.08.2022**
(21) Application number: 16703521.1
(22) Date of filing: 05.02.2016
(51) Int. Cl.: B25J 9/16, G05B 19/423

(54) **CONTROLLING AN INDUSTRIAL ROBOT USING INTERACTIVE COMMANDS**
STEUERUNG EINES INDUSTRIEROBOTERS UNTER VERWENDUNG INTERAKTIVER BEFEHLE
COMMANDE D'UN ROBOT INDUSTRIEL À L'AIDE DE COMMANDES INTERACTIVES

(43) Date of publication of application: 12.12.2018
(73) Proprietor: ABB Schweiz AG, 5400 Baden (CH)
(72) Inventor: HEDLUND, Annika, 723 41 Västerås (SE); LUNDBERG, Ivan, 722 46 Västerås (SE); STYRUD, Jonathan, 722 10 Västerås (SE); NORDVALL, Martin, 722 23 Västerås (SE); SJÖBERG, Ralph, 723 55 Västerås (SE); GROTH, Tomas, 724 80 Västerås (SE)
(74) Representative: Kransell & Wennborg KB
(86) International application number: PCT/EP2016/052446
(87) International publication number: WO 2017/133781

(56) References cited:
- WO-A1-2014/093822
- KR-A- 20070 061 078
- US-A1- 2015 009 124
- US-B1- 9 186 793

## Description

### Field of the invention

The present invention relates to a method for controlling an industrial robot using interactive commands. The present invention also relates to a control unit for controlling the motions of an industrial robot based on interactive commands.

### Background of the invention

An industrial robot comprises a manipulator and a robot control unit for controlling the motions of the manipulator. The manipulator includes a plurality of joints that are moved under the control of the robot control unit. The robot may also include a portable user interface to the robot, such as a TPU (Teach Pendant Unit), a tablet or other portable H MI for manually operating the robot. The user communicates with the robot control unit via the portable user interface and sends commands to the robot through the user interface.

In a collaborative robot system, the user needs to communicate with the robot in an easy and intuitive way. Using the TPU or any other portable HM I to communicate with the robot in a collaborative environment is a slow and unintuitive process. Hand guided teaching in which the user communicates directly with the robot using his hands is a faster and more intuitive way of communication. It is known to use interactive commands where the user gives commands directly to the robot, without using the portable user interface to the robot. The interactive commands are predefined and stored in a data storage of the robot controller. For each of the interactive commands, an action is defined, which action is to be performed by the robot upon recognizing the interactive command. Examples of interactive commands are gesture commands and touch commands. With a gesture command is meant a predefined gesture made by the user, for example, using his hands or fingers. The robot identifies the gestures, and carries out the action related to the identified gesture. With a touch command is meant a command given to the robot by the user touching the robot, for example, by tapping on the robot. The user gives the robot a command, such as starting or stopping the robot, by tapping the robot using his hand.

In more advanced cases, more commands than start and stop are needed. There is a desire to have many different interactive commands depending on situation and user preferences, for example, to open a gripper, or step back. There exist solutions to this problem which require the user to release his grip on the robot with one or both hands, such as when operating the TPU or other HMI located adjacent to the robot, which are impractical and time consuming. Other solutions allow the user to keep his hands on the robot, such as voice commands, but these solutions require additional equipment and may be impractical in noisy environments. Another solution to this problem is to define a plurality of different "touch patterns" or gestures representing different commands and actions to be carried out, for example, two or more consecutive taps.

WO2014093822 discloses a method for controlling an industrial robot according to the preamble of claim 1.

From US2015009124, a mobile phone with the following behavior is known. When a user receives a call, the user places their hands in the position or pose of an activation gesture that enables the system to recognize the hands in the pre-defined activation gesture. Once the activation gesture has been made by the user and recognized, the user then moves or configures the hand to provide a thumbs-up gesture (command gesture), which means that the user wants to answer the call. The user can receive feedback or a prompt from the phone, for example a voice signal asking, once the activation gesture has been validated, "do you want to take the call?" As the user makes the thumbs-up gesture, the system will detect the thumbs-up gesture and match or otherwise validate the gesture. In one embodiment, a confirmation from the phone, such as "Call answered" can be heard.

US9186793 discloses an autonomous, automated or Al-controlled robot for inspecting aircraft or industrial equipment. A human operator may direct the robot's attention to interesting regions by illuminating these with a light beam, and the modulation of the beam may correspond to different sensors, so-called contexts. Pairs of illuminated regions and contexts, which the operator has provided during training, may be associated with a corresponding inspection task and stored.

However, the number of suitable touch patterns and gestures is limited. It can also be difficult for the user to remember the interactive commands if the number of commands is large and if they are rather similar. Accordingly there is a risk that the user provides wrong commands to the robot. Further, even though tapping the robot is intuitive, it might not always be clear what should happen if the robot is tapped.

### Object and summary of the invention

It is an object of the present invention to at least partly overcome the above problems.

This object is achieved by the invention according to the independent claims.

In a first aspect, the invention provides a method as defined in claim 1.

Note that the order in which the method steps are carried out may vary. For example, the step "selecting which action to be performed" can be carried out after the step "recognizing the interactive command given by a user".

According to the invention, one interactive command can have a plurality of defined optional actions to be carried out when the robot recognizes the command. Which one of the actions to be carried out depends on the current context of the robot. Thus, the same interactive command ca n be used for commanding several different actions. Which action is performed upon recognizing the command is decided based on the current context of the robot. Thus, current context of the robot controls which action is carried out by the robot when the user gives a specific interactive command. Accordingly, the number of interactive commands needed is significantly reduced. For example, it is possible to have only one touch command, e.g. tap the robot, to provide a large number of actions. The invention increases the range of possible actions that can be performed by the interactive command. By defining in advance the action to be performed when the robot detects the command, such as a tap, the user gets full control without having to access any HMI during most of the operation. This is an intuitive way to control the robot in a flexible and clear way. The invention saves time and reduces risk of mistakes, such as providing wrong command to the robot.

With an interactive command is meant a command given directly to the robot by the user, not via any HMI, such as a TPU or a tablet. The user provides the command using his hand or body, for example, using gestures or touching the robot. The predefined actions can be any type of action carried out by the robot or for controlling the robot. The actions are, for example, to start robot, to stop robot, to step back with the robot, to step forward with the robot, to open gripper, to close gripper, to save a target point etc.

With the term "context" is meant the state or situation of the robot and should be broadly interpreted. The contexts of the robot, which control the selection of which one of the predefined actions to be carried out, are preferably specified beforehand. The robot can be switched between different contexts, for example, "production mode" and "teach mode". The current context of the robot is the context of the robot at the moment. The control unit of the robot has information about the current context of the robot. Thus, determining the current context can be done by retrieving information about the current context from the control unit.

The invention makes it possible to automatically determine which action to be performed in the current context upon recognizing an interactive command. However, which action to be performed in the current context can also be determined by the user in advance.

The method comprises providing feedback to the user regarding which action to be performed for the interactive command in the current context. Which action to be performed is determined based on the current context of the robot and the defined actions. The feedback can be visible or audible, tactile or other types of feedback for showing which action will be performed. Thus, the user will be informed in advance about which action will be carried out upon giving a certain interactive command. This embodiment avoids misunderstanding what a certain command does in the current context, and thus reduces the risk of mistakes. For example, it is clear what should happen if the robot is tapped by the user.

According to an embodiment of the invention, the method comprises providing a feedback to the user when the interactive command has been recognized. This is a confirmation to the user that the robot has received the command, and will also add clarity.

Suitably, the method comprises specifying a plurality of contexts where the defined actions can be performed, and associating each of the specified contexts with at least one of the defined actions. For example, a plurality of actions is associated with one or more of the contexts, or each of the actions is associated with one of the contexts.

According to an embodiment of the invention, each of the defined actions is associated with one of the specified contexts, and the method comprises selecting the action associated with the current context. In order to find the action associated with the current context, the current context is compared with the specified contexts. This embodiment makes it possible to automatically select which action to be performed in the current context without any input from the user.

According to an embodiment of the invention, at least one of the specified contexts is associated with a plurality of the defined actions, and the method comprises presenting a list of suggested actions to be performed for the interactive command based on the actions associated with the current context of the robot, receiving a user selected action for the current context, storing the user selected action for the current context, and selecting the user selected action upon recognizing the interactive command in the current context. Which action to be performed in the current context is selected manually from a list of suggested actions. This embodiment allows the user to select which action to be performed for the interactive command in the current context. The user selects among a plurality of predefined actions associated with the current context. Suitably, the list of suggested actions is presented to the user when the robot is in the current context. Different selectable actions can be presented in different contexts. This embodiment makes the action carried out for a command dependent on the contexts as well as user preference, which is an advantage for the user.

According to an embodiment of the invention, the method comprises defining a plurality of interactive commands, defining a plurality of actions to be performed by the robot for each of the interactive commands, and upon recognizing one of the defined interactive commands, selecting which action to be performed based on the actions defined for the recognized interactive command and the current context of the robot. This embodiment makes it possible to have more than one interactive command, and each of the commands has one or more actions dependent on the context.

According to an embodiment of the invention, the at least one interactive command is a touch command or a gesture command. Touch commands and gesture commands are very intuitive and can be given in a noisy environment.

According to an embodiment of the invention, the specified contexts of the robot comprises teach mode and production mode. When the robot is in teach mode, the robot is taught target points and a robot program is generated based on the taught target points. It is often a desired to command different actions in teach mode and in production mode. This embodiment enables to command different actions in teach mode and production mode with the same interactive command. The action defined for interactive command in teach mode can, for example, be "store target point". When the robot is in production mode, the robot program is executed. The action defined for interactive command in production mode can, for example, be "start the robot" or "stop the robot".

According to an embodiment of the invention, the specified contexts of the robot comprises specified parts of one or more robot programs. This embodiment makes it possible to define different action for the same command depending on which part of the robot program is currently executed.

According to an embodiment of the invention, the robot comprises a HMI including a plurality of menus, the specified contexts of the robot comprise one or more menus of the HMI. This embodiment makes it possible to define different action for the same command depending on which menu the user has selected on the HMI. For example, this could be connected to different support functions of the robot control unit. For instance, in one screen a tap could mean "step in direction of closest X, Y or Z axis", and in another screen it could mean "teach target point"

In a second aspect, the invention provides a control unit for controlling the motions of an industrial robot as defined in claim 10.

According to an embodiment of the invention, each of the defined actions is associated with a specified context where the defined action can be performed, and the processing unit is configured to select the action associated with the current context.

According to an embodiment of the invention, at least one of the specified contexts is associated with a plurality of the defined actions, and the control unit is configured to present a list of suggested actions to be performed for the interactive command based on the actions associated with the current context of the robot, to receive a user selected action for the current context, to store the user selected action for the current context, and to select the user selected action upon recognizing the interactive command in the current context.

The control unit is configured to provide feedback to the user regarding which action to be performed for the interactive command in the current context. For example, the control unit comprises a display unit, and the processing unit is configured to provide feedback to the user regarding the selected action to be performed on the display unit.

### Brief description of the drawings

The invention will now be explained more closely by the description of different embodiments of the invention and with reference to the appended figures.
Fig. 1 shows an example of an industrial robot having a control unit according to the invention and a user giving the robot an interactive command.
Fig. 2 shows an example of commands, associated actions and specified contexts for a first embodiment of the invention.
Fig. 3 shows another example of a command, associated actions and specified contexts for a second embodiment of the invention.
Fig. 4 shows a flow chart of a first example of a method for controlling an industrial robot using interactive commands according to the first embodiment of the invention.
Fig. 5 shows a flow chart of a second example of a method for controlling an industrial robot using interactive commands according to the first embodiment of the invention.
Fig. 6 shows a flow chart of an example of a method for controlling an industrial robot using interactive commands according to the second embodiment of the invention.

### Detailed description of preferred embodiments of the invention

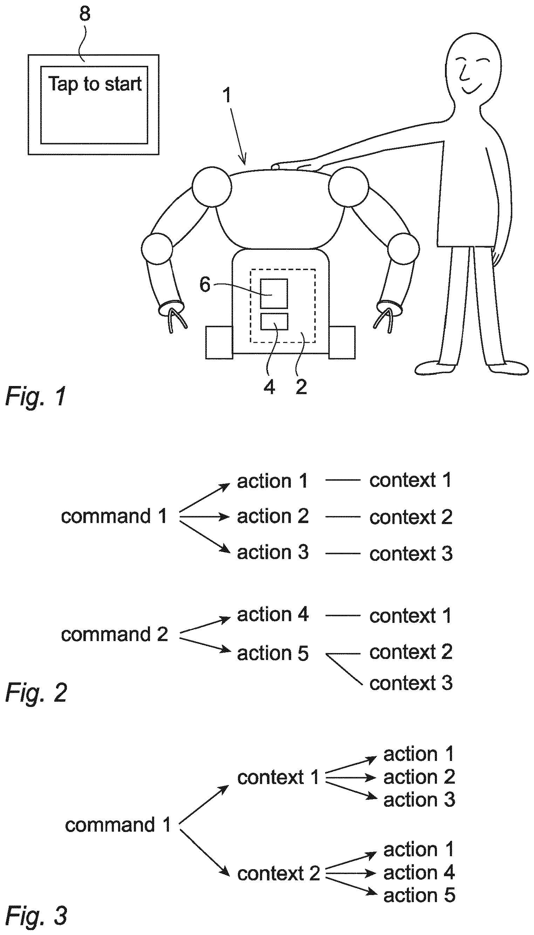

Figure 1 shows an example of an industrial robot 1 having a control unit 2 according to the invention. The robot has at least one arm. The robot disclosed in figure 1 has two arms. The robot includes a plurality of joints that are moved about a plurality of axes under the control of the control unit. The control unit includes software as well as hardware, such as data storage 4, and a processing unit 6 for handling main functions of the robot control, such as executing robot programs. The processing unit 4 may include one or more central processing units (CPU). The data storage 4 has storage medium for storing program code for controlling the motions of the robot. The robot may also include a user interface to allow communication between the robot and a user. For example, the user interface is a portable operating device for teaching and manually operating the robot. Alternatively, the user interface is a screen with touch functionally on the robot body. In this type of robot, the control unit 1 is integrated in the body of the robot. In other types of robots the control unit is separated from the body of the robot and is communicating with the robot through a wire or wirelessly.

The data storage 4 comprises space for storing defined interactive commands and the processing unit 6 is configured to execute the recognized commands. The robot comprises means for recognizing the interactive commands, which means depends on the type of the interactive command. If the interactive command is a touch command, the robot may include one or more sensor for detecting when the user touches the robot, and software for recognizing touch patterns based on outputs from the sensors. If the interactive command is a gesture, the robot may comprise a camera for detecting the gesture, and software for recognizing the gesture based on images received from the camera.

The data storage 4 further comprises space for storing a plurality of defined actions to be performed upon recognizing a defined interactive command, and for storing a plurality of specified contexts where the defined actions can be performed. The specified contexts should be selected so that it is possible to unambiguously determine the current context of the robot. The robot can be switched between different contexts, for example, production mode and teach mode. The current context of the robot is the context of the robot at the moment. The contexts can, for example, be specified as operating modes of the robot, such as production mode, teach mode, or manual mode. Then, the current context of the robot is the current operating mode of the robot. The contexts can also be states of the robot, for example, whether the robot is moving or standing still. The contexts can also include specified sub contexts, for example, one context can be specified as "production mode and the robot is standing still" and another context can be specified as "production mode and the robot is moving". The contexts can also be specified as predefined parts of the robot program. Then, the current context of the robot depends on which part of the robot program the robot is executing. The context of the robot can also be specified as menus of the HMI. Then, the current context of the robot depends on which menu has been selected by the user on the HMI.

Examples of possible actions that could be defined:
- start the robot
- stop the robot
- open gripper
- save target point
- move 1 mm
- activate I/O
- activate tool

If the interactive commands are touch commands, the command can be a "tap" command. If more than one commands are defined, other touch patterns than tap could be defined e.g. double tap, tap in X/Y/Z direction, tap elbow etc.

Each of the specified contexts should be associated with at least one of the defined and stored actions. Preferably, the actions and contexts are predefined. The processing unit 6 is configured to determine the current context of the robot and to select which one of the defined actions to be performed based on the actions defined for the command and the current context of the robot. The processing unit 6 is configured to perform the selected action upon recognizing that the interactive command has been given by the user. Optionally, the user can be given visual or audial feedback e.g. by displaying the current command and action on an HMI. Then the user always knows what the command will do. The control unit may include a display unit 8 to display the feedback to the user regarding which action to be performed upon receiving the defined interactive command in the current context. For example, the commands are displayed together with the selected action for the current context, as shown in the figure 1. The display unit 8 may also provide feedback to the user when the interactive command has been recognized.

Feedback to the user for some of the above actions and commands are, for example:
- tap to start robot (during production mode and the robot is standing still)
- tap to stop robot (during production mode and the robot is moving)
- tap to open gripper (during specific part of production program, or during teaching)
- tap to save target point (during teaching)
- tap to move 1 mm (adjust position in steps by tapping during teaching)

In one embodiment of the invention, each of the defined actions is associated with at least one of the specified contexts, and the control unit is configured to compare the current context with the specified contexts and based thereon select which action to be performed.

Figure 2 shows an example of this embodiment of the invention. Two interactive commands (command 1 and 2) have been defined. A plurality of actions 1- 5 have been specified for each of the commands 1 and 2. Further, a plurality of contexts 1 - 3 where the commands can be performed have been specified. Each of the actions 1 - 5 has been associated with at least one context. As shown in figure 2, for command 1 action 1 has been associated with context 1, action 2 has been associated with context 2, and action 3 has been associated with context 3. For command 2, action 4 has been associated with context 1, and action 5 has been associated with context 2 and context 3. This means that when the current context of the robot is context 1, action 1 is selected for command 1 and action 4 is selected for command 2. When the current context of the robot is context 2, action 2 is selected for command 1, and action 5 is selected for command 2. Further, when the current context of the robot is context 3, action 3 is selected for command 1, and action 5 is selected for command 2.

In another example, one interactive command "tap robot" has been defined, and two contexts "production mode" and "teach mode" have been specified. When the robot is in production mode, the motions of the robot are controlled by a robot program. When the robot is in teach mode, the robot is programmed by teaching a plurality of target points on a programing path. Two actions have been defined for the command "tap robot". One action is "start robot" and the other action is "store target point". The action "start robot" has been associated with the "production mode" and the action "store target point" has been associated with the "teach mode".

| Command: | Context: | Action: |
|---|---|---|
| "tap robot" | "production mode" | "start robot" |
| "tap robot" | "teach mode" | "store target point" |

Thus, when the robot is in "production mode" the action "start robot" is performed when the user taps the robot, and when the robot is in "teach mode" the action "store target point" is performed when the user taps the robot. As shown in the example of figure 1, the current context of the robot is "production mode" and accordingly the text "Tap to start" is displayed on the display unit 8. Then the user knows that the robot will start if the user taps the robot. It is also possible to display more than one command and the action associated with each command in the current context.

An alternative embodiment of the invention, allows the user to choose which one of a plurality of defined actions to be performed for an interactive command in the current context. Thus, which action to be performed for a certain command in the specified contexts is not determined beforehand. A plurality of contexts where the defined actions can be performed are specified, and each of the specified contexts is associated with one or more defined actions. At least one of the specified contexts is associated with a plurality of defined actions. In this embodiment, the control unit 2 is configured to present a list of suggested actions to be performed for the interactive command in the current context. The list of suggested actions contains the actions associated with the current context of the robot. The user selects one of the actions on the list of actions. The control unit is configured to receive information on the selected action for the current context, and to store the selected action as the user selected action for the current context. The control unit is configured to receive information on when an interactive command has been recognized from the means for recognizing the interactive commands, for example, from the one or more sensor or the camera. Alternatively, the control unit can be configured to recognize when the user gives an interactive command. For example, the control unit is configured to select the stored user selected action upon recognizing the interactive command as long as the robot stays in the current context. When the robot changes to another context, the control unit 2 is configured to present a new list of suggested actions to be performed for the interactive command in the new current context. The list of suggested actions contains the actions associated with the new current context of the robot.

Figure 3 shows an example of a second embodiment of the invention, where one interactive command 1 has been defined. Further, two contexts 1, 2 where the command can be performed have been specified. A plurality of actions 1 - 5 have been specified for the command 1. Each of the contexts 1, 2 have been associated with a plurality of the actions. As shown in figure 3, context 1 is associated with the actions 1, 2, 3 and context 2 is associated with the actions 1, 4, 5. When the robot switches to context 1, the actions 1, 2 and 3 are displayed as suggested actions to the user, and the user can choose which one of the actions 1, 2 and 3 to be performed for command 1 as long as the robot stays in context 1. When the robot switches to context 2, the actions 1, 4 and 5 are displayed as suggested actions to the user, and the user can choose which one of the actions 1, 4 and 5 to be performed for command 1 as long as the robot stays in context 2. In another example, more than one command can be defined in the same way.

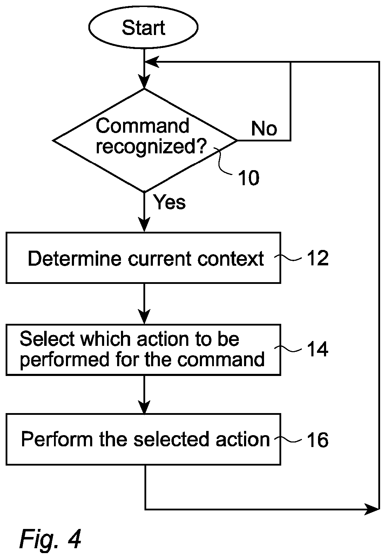

Figure 4 shows a flow chart of an example of a method for controlling an industrial robot using interactive commands according to a first embodiment of the invention. It will be understood that each block of the flow chart can be implemented by computer program instructions. The method requires that an interactive command and a plurality of actions to be performed by the robot have been defined beforehand and stored, for example, in a data storage of the robot. Further, a plurality of contexts where the defined actions can be performed have been specified, and each of the defined actions has been associated with at least one of the specified contexts, as shown in figure 2. In a first method step, the control unit waits for the user to give the interactive command. The method comprises waiting for an interactive command to be recognized, block 10. If there are more than one defined command, the method comprises waiting for one of the defined interactive commands to be recognized. When an interactive command has been recognized, the current context of the robot is determined, block 12. This can be done by retrieving information about the current context from the control unit. How this is done depends on which the specified contexts are. For example, if the specified contexts are "production mode" and "teach mode", the control unit has knowledge about in which one of the modes the robot is currently operating. Thereafter, the action to be performed is selected based on the current context, block 14. This is done by selecting the action associated with the current context. The selected action is performed, block 16. For example, the robot is started or stopped. When the action has been performed, the control unit waits for the next time the user gives the interactive command, block 10.

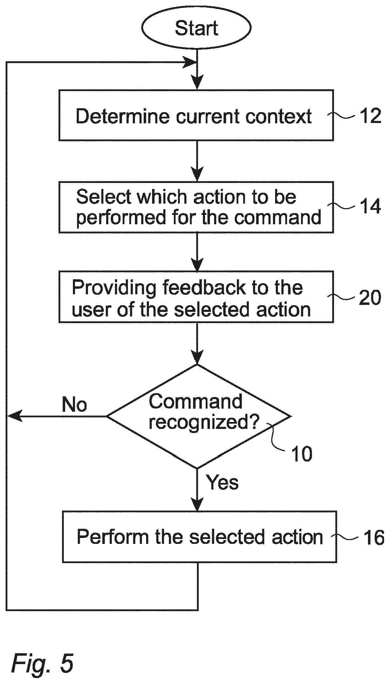

Figure 5 shows a flow chart of another example of the method according to the first embodiment of the invention. One or more commands and a plurality of actions for each of the commands have been defined beforehand. Further, for each of the actions, a context where the defined actions can be performed, has been specified. In a first step, the current context is determined, block 12. Thereafter, which action to be performed in the current context for the defined command is selected, block 14. If more than one interactive command have been defined, one action is selected for each of the defined commands. This is done by selecting the action associated with the current context for each of the commands. When the action(s) has/have been selected for the command(s), the user is provided with feedback regarding which action(s) to be performed for the interactive command(s), block 20. This is, for example, done by displaying the command(s) and the selected action(s) on a display unit 8, as shown in figure 1. Then, the control unit waits for the user to give the interactive command. The method further comprises waiting for an interactive command to be recognized, block 10. When the interactive command has been recognized, the selected action is performed, block 16. When the action has been performed, the method is repeated.

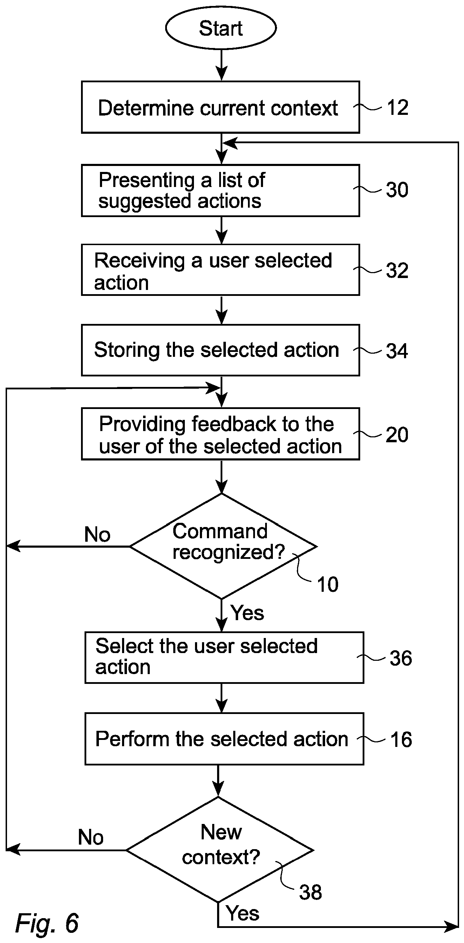

Figure 6 shows a flow chart of a method for controlling an industrial robot using interactive commands according to a second embodiment of the invention. In this embodiment, at least one interactive command has been defined and a plurality of contexts where the command can be performed have been specified. A plurality of actions have been defined, and each of the defined contexts has been associated with at least one of the defined actions. At least one of the contexts has been assigned a plurality of defined actions, as shown in figure 3. In this embodiment, the user is allowed to select which action to be performed in the current context among the actions associated with the current context. The user is presented with the actions to choose among when the robot enters a new context, for example, when the robot is switched to teach mode, or the robot is switched back to production mode.

When the program begins, the current context is determined, block 12. The determined current context is compared with the specified contexts in order to find the actions associated with the current context. The actions associated with the current context are presented to the user as a list of suggested actions to be performed for the interactive command, block 30. The list of suggested actions can be presented on any HMI connected to the control unit, such as a teach pendant or tablet. When the user has selected one of the actions in the presented list of actions, information on the user selection is received, block 32. The selected action for the current context is stored as the user selected action for the command in the current context, block 34. Optionally, the user is provided with feedback of the user selected action for the command. For example, the command and the user selected action for the command are presented on a display unit 8, as shown in figure 1. The control unit then waits for the user to give the interactive command and to recognize the interactive command, block 10. When the interactive command has been recognized, the user selected action for the command is selected, block 36. The user selected action for the recognized command is performed, block 16. When the command has been performed, it is checked if the current context has been changed to another context, block 38. As long as the robot stays in the same context the steps 20, 10, 36, 16 and 38 are repeated. When the context of the robot changes to another of the specified contexts, the user is presented with a new list of suggested actions for the new current context and is allowed to choose a new action for the command in the new current context, block 30. It is also possible to allow the user to change the user selected action for the current context at any time as long as the robot is in the current context.

It is also possible to combine the described embodiments. For example, the action to be performed for an interactive command can be selected automatically based on the current context as a first suggestion, and selected manually from a list of suggestions if the user do not accept the suggested action.

It is also possible to automatically select a certain action based on "most likely" principle, e.g. in production mode "tap to stop/start" and in teach mode "tap to store target point". The command can then have more than one action associated with a specified context, and the selection between those actions is performed based on defined sub context, such as the status of the robot or a robot tool. For example, the touch command "tap robot" can be associated with the actions "start robot" and "stop robot" in the context "production mode". With the most likely principle, the action "start robot" is selected if the robot is stopped, and the action "stop robot" is selected if the robot is running. In the same way, an action "open gripper" is selected if the gripper of the robot is closed, and the action "close gripper" is selected if the gripper is open.

The present invention is not limited to the embodiments disclosed but may be varied and modified within the scope of the following claims. For example, in the robot program a specific instruction for defining the action of a defined interactive command for the next part of the program could be defined, e.g. such that in one part of the program an interactive command could mean "open gripper" and in another part of the program the same interactive command could mean "close gripper" or "activate tool". Thus, a defined context can be a part or a robot program. Alternatively, which action is to be performed for the interactive command in a part of the robot program can be selected by a program instruction in the program part. It is also possible to have different context menus on the HMI. Forexample, the robot is set in a defined context by activating a button on the HMI, and the robot is switched back to the previous context by deactivating the button. For example, one context can be defined as "precise adjustment", and when the user activates the "precise adjustment" button during teaching of the robot, the action for the tap command e.g. is "move 1 mm", and when the user deactivates the "precise adjustment" button during teaching of the robot, the action for the tap command e.g. is "save target point".

## Claims

1. A method for controlling an industrial robot (1) using interactive commands given directly to the robot by a user, not via any human-machine interface, such as a teach pendant unit or tablet, the method comprising the steps of:
- defining at least one interactive command,
- defining a plurality of actions to be performed by the robot for the interactive command, wherein each action has been associated with a specified context of the robot,
- determining (12) a current context of the robot,
- selecting (14) an action to be performed based on the actions defined for the command and the current context of the robot,
- recognizing (10) an interactive command given by a user, and
- performing (16) the selected action,
**characterized by** providing feedback (20) to the user, prior to recognizing the interactive command, regarding the action to be performed for the interactive command in the current context.

2. The method according to claim 1, wherein the method comprises:
- specifying a plurality of contexts where the defined actions can be performed, and
- associating each of the specified contexts with at least one of the defined actions.

3. The method according to claim 2, wherein the method comprises selecting the action associated with the current context.

4. The method according to claim 2 or 3, wherein at least one of the specified contexts is associated with a plurality of the defined actions, and the method comprises:
- presenting a list of suggested actions to be performed for the interactive command based on the actions associated with the current context of the robot,
- receiving a user selected action for the current context,
- storing the user selected action for the current context, and
- selecting the user selected action upon recognizing the interactive command in the current context.

5. The method according to any of the preceding claims, wherein the specified contexts of the robot comprise teach mode and production mode.

6. The method according to any of the preceding claims, wherein the specified contexts of the robot comprise specified parts of one or more robot programs.

7. The method according any of the preceding claims, wherein the robot comprises a human-machine interface, HMI, including a plurality of menus, the specified contexts of the robot comprise menus of the HMI.

8. The method according to any of the preceding claims, wherein the method comprises:
- defining a plurality of interactive commands,
- defining a plurality of actions to be performed by the robot for each of the interactive commands, and
- upon recognizing one of the defined interactive commands, selecting which action to be performed based on the actions defined for the recognized interactive command and the current context of the robot.

9. The method according to any of the preceding claims, wherein the interactive command is a touch command or a gesture command.

10. A control unit (2) for controlling the motions of an industrial robot (1) based on interactive commands given directly to the robot by a user, not via any human-machine interface, such as a teach pendant unit or tablet,
wherein the control unit comprises data storage (4) for storing at least one defined interactive command and a processing unit (6) configured to execute the interactive command upon recognizing the interactive command,
- the data storage (4) comprising a plurality of defined actions to be performed by the robot for the defined interactive command, wherein each action has been associated with a specified context of the robot, and
- the processing unit (6) is configured to determine a current context, to select an action to be performed based on the actions defined for the command and the current context of the robot, and to perform the selected action upon recognizing the interactive command,
**characterized in that** the control unit (2) is configured to provide feedback to the user, prior to recognizing the interactive command, regarding the action to be performed for the interactive command in the current context.

11. The control unit according to claim 10, wherein the data storage (4) comprises a plurality of specified contexts where the defined actions can be performed, and each of the specified contexts being associated with at least one of the defined actions.

12. The control unit according to claim 11, wherein at least one of the specified contexts is associated with a plurality of the defined actions, and the control unit (2) is configured to present a list of suggested actions to be performed for the interactive command based on the actions associated with the current context of the robot, to receive a user selected action for the current context, to store the selected action for the current context, and to select the user selected action upon recognizing the interactive command in the current context.

13. The control unit according to claim 10 or 11, wherein the processing unit (6) is configured to select the action associated with the current context.

## Patentansprüche

1. Verfahren zum Steuern eines Industrieroboters (1) mit Hilfe interaktiver Befehle, die dem Roboter direkt von einem Anwender gegeben werden, nicht über eine Mensch-Maschine-Schnittstelle, wie beispielsweise eine Programmierhandgeräteinheit oder ein Tablet, wobei das Verfahren die folgenden Schritte umfasst:
- Definieren mindestens eines interaktiven Befehls,
- Definieren mehrerer Aktionen, die durch den Roboter für den interaktiven Befehl auszuführen sind, wobei jeder Aktion ein spezifischer Kontext des Roboters zugeordnet wurde,
Bestimmen (12) eines aktuellen Kontextes des Roboters,
- Auswählen (14) einer auszuführenden Aktion, basierend auf den Aktionen, die für den Befehl definiert sind, und dem aktuellen Kontext des Roboters,
- Erkennen (10) eines interaktiven Befehls, der von einem Anwender gegeben wird, und
- Ausführen (16) der ausgewählten Aktion,
**gekennzeichnet durch** Bereitstellen einer Rückmeldung (20) an den Anwender bezüglich der Aktion, die für den interaktiven Befehl in dem aktuellen Kontext auszuführen ist, vor dem Erkennen des interaktiven Befehls.

2. Verfahren nach Anspruch 1, wobei das Verfahren Folgendes umfasst:
- Spezifizieren mehrerer Kontexte, in denen die definierten Aktionen ausgeführt werden können, und
- Zuordnen jedes der spezifizierten Kontexte zu mindestens einer der definierten Aktionen.

3. Verfahren nach Anspruch 2, wobei das Verfahren das Auswählen der Aktion umfasst, welcher der aktuelle Kontext zugeordnet ist.

4. Verfahren nach Anspruch 2 oder 3, wobei mindestens einer der spezifizierten Kontexte mehreren der definierten Aktionen zugeordnet ist und das Verfahren Folgendes umfasst:
- Präsentieren einer Liste vorgeschlagener Aktionen, die für den interaktiven Befehl auszuführen sind, basierend auf den Aktionen, die dem aktuellen Kontext des Roboters zugeordnet sind,
- Empfangen einer vom Anwender ausgewählten Aktion für den aktuellen Kontext,
- Speichern der vom Anwender ausgewählten Aktion für den aktuellen Kontext und
- Auswählen der vom Anwender ausgewählten Aktion auf das Erkennen des interaktiven Befehls in dem aktuellen Kontext hin.

5. Verfahren nach einem der vorhergehenden Ansprüche, wobei die spezifizierten Kontexte des Roboters Unterrichtsmodus und Produktionsmodus umfassen.

6. Verfahren nach einem der vorhergehenden Ansprüche, wobei die spezifizierten Kontexte des Roboters spezifizierte Teile eines oder mehrerer Roboterprogramme umfassen.

7. Verfahren nach einem der vorhergehenden Ansprüche, wobei der Roboter eine Mensch-Maschine-Schnittstelle, HMI, umfasst, die mehrere Menüs beinhaltet, wobei die spezifizierten Kontexte des Roboters Menüs der HMI umfassen.

8. Verfahren nach einem der vorhergehenden Ansprüche, wobei das Verfahren Folgendes umfasst:
- Definieren mehrerer interaktiver Befehle,
- Definieren mehrerer Aktionen, die durch den Roboter für jeden der interaktiven Befehle auszuführen sind, und
- auf das Erkennen eines der definierten interaktiven Befehle hin, Auswählen, welche Aktion auszuführen ist, basierend auf den Aktionen, die für den erkannten interaktiven Befehl definiert sind, und dem aktuellen Kontext des Roboters.

9. Verfahren nach einem der vorhergehenden Ansprüche, wobei der interaktive Befehl ein Berührungsbefehl oder ein Gestenbefehl ist.

10. Steuereinheit (2) zum Steuern der Bewegungen eines Industrieroboters (1) basierend auf interaktiven Befehlen, die dem Roboter direkt von einem Anwender gegeben werden, nicht über eine Mensch-Maschine-Schnittstelle, wie beispielsweise eine Programmierhandgeräteinheit oder ein Tablet,
wobei die Steuereinheit Datenspeicher (4) zum Speichern mindestens eines definierten interaktiven Befehls und eine Verarbeitungseinheit (6) umfasst, die dafür gestaltet ist, den interaktiven Befehl auf das Erkennen des interaktiven Befehls hin auszuführen,
- wobei der Datenspeicher (4) mehrere definierte Aktionen umfasst, die durch den Roboter für den definierten interaktiven Befehl auszuführen sind, wobei jede Aktion einem spezifischen Kontext des Roboters zugeordnet wurde, und
- wobei die Verarbeitungseinheit (6) dafür gestaltet ist, einen aktuellen Kontext zu bestimmen, um basierend auf den Aktionen, die für den Befehl definiert sind, und dem aktuellen Kontext des Roboters eine auszuführende Aktion auszuwählen und die ausgewählte Aktion auf das Erkennen des interaktiven Befehls hin auszuführen,
**dadurch gekennzeichnet, dass** die Steuereinheit (2) dafür gestaltet ist, vor dem Erkennen des interaktiven Befehls eine Rückmeldung an den Anwender bezüglich der Aktion, die für den interaktiven Befehl in dem aktuellen Kontext auszuführen ist, bereitzustellen.

11. Steuereinheit nach Anspruch 10, wobei der Datenspeicher (4) mehrere spezifizierte Kontexte umfasst, in denen die definierten Aktionen ausgeführt werden können, und jedem der spezifischen Kontexte mindestens eine der definierten Aktionen zugeordnet ist.

12. Steuereinheit nach Anspruch 11, wobei mindestens einer der spezifizierten Kontexte mehreren der definierten Aktionen zugeordnet ist und die Steuereinheit (2) dafür konfiguriert ist, eine Liste vorgeschlagener Aktionen, die für den interaktiven Befehl auszuführen sind, basierend auf den Aktionen, die dem aktuellen Kontext des Roboters zugeordnet sind, zu präsentieren, eine vom Anwender ausgewählte Aktion für den aktuellen Kontext zu empfangen, die vom Anwender ausgewählte Aktion für den aktuellen Kontext zu speichern und die vom Anwender ausgewählte Aktion auf das Erkennen des interaktiven Befehls in dem aktuellen Kontext hin auszuwählen.

13. Steuereinheit nach Anspruch 10 oder 11, wobei die Verarbeitungseinheit (6) dafür gestaltet ist, die Aktion auszuwählen, die dem aktuellen Kontext zugeordnet ist.

## Revendications

1. Procédé de commande d'un robot industriel (1) à l'aide de commandes interactives données directement au robot par un utilisateur, et non par l'intermédiaire d'une interface homme-machine, telle qu'un pendentif d'apprentissage ou tablette, le procédé comprenant les étapes suivantes :
- la définition d'au moins une commande interactive,
- la définition d'une pluralité d'actions que doit exécuter le robot pour la commande interactive, chaque action ayant été associée à un contexte spécifié du robot,
- la détermination (12) d'un contexte actuel du robot,
- la sélection (14) d'une action à exécuter en fonction des actions définies pour la commande et du contexte actuel du robot,
- la reconnaissance (10) d'une commande interactive donnée par un utilisateur, et
- l'exécution (16) de l'action sélectionnée,
**caractérisé par** la fourniture d'un retour d'informations (20) à l'utilisateur, avant la reconnaissance de la commande interactive, concernant l'action à exécuter pour la commande interactive dans le contexte actuel.

2. Procédé selon la revendication 1, le procédé comprenant :
- la spécification d'une pluralité de contextes dans lesquels les actions définies peuvent être exécutées, et
- l'association de chacun des contextes spécifiés à au moins une des actions définies.

3. Procédé selon la revendication 2, le procédé comprenant la sélection de l'action associée au contexte actuel.

4. Procédé selon la revendication 2 ou 3, dans lequel au moins un des contextes spécifiés est associé à une pluralité des actions définies, le procédé comprenant :
- la présentation d'une liste d'actions suggérées à exécuter pour la commande interactive en fonction des actions associées au contexte actuel du robot,
- la réception d'une action sélectionnée par l'utilisateur pour le contexte actuel,
- la mémorisation de l'action sélectionnée par l'utilisateur pour le contexte actuel, et
- la sélection de l'action sélectionnée par l'utilisateur lors de la reconnaissance de la commande interactive dans le contexte actuel.

5. Procédé selon l'une quelconque des revendications précédentes, dans lequel les contextes spécifiés du robot comprennent un mode d'apprentissage et un mode de production.

6. Procédé selon l'une quelconque des revendications précédentes, dans lequel les contextes spécifiés du robot comprennent des parties spécifiées d'un ou plusieurs programmes de robot.

7. Procédé selon l'une quelconque des revendications précédentes, dans lequel le robot comprend une interface homme-machine, IHM, comportant une pluralité de menus, les contextes spécifiés du robot comprenant des menus de l'IHM.

8. Procédé selon l'une quelconque des revendications précédentes, le procédé comprenant :
- la définition d'une pluralité de commandes interactives,
- la définition d'une pluralité d'actions que doit exécuter le robot pour chacune des commandes interactives, et
- à la reconnaissance de l'une des commandes interactives définies, la sélection de l'action à exécuter en fonction des actions définies pour la commande interactive reconnue et du contexte actuel du robot.

9. Procédé selon l'une des revendications précédentes, dans lequel la commande interactive est une commande tactile ou une commande gestuelle.

10. Unité de commande (2) pour commander les mouvements d'un robot industriel (1) en fonction de commandes interactives données directement au robot par un utilisateur, non par l'intermédiaire d'une interface homme-machine, telle qu'un pendentif d'apprentissage ou tablette,
l'unité de commande comprenant une mémoire de données (4) pour mémoriser au moins une commande interactive définie et une unité de traitement (6) configurée pour exécuter la commande interactive à la reconnaissance de la commande interactive,
- la mémoire de données (4) comprenant une pluralité d'actions définies que doit exécuter le robot pour la commande interactive définie, chaque action ayant été associée à un contexte spécifié du robot, et
- l'unité de traitement (6) est configurée pour déterminer un contexte actuel, sélectionner une action à exécuter en fonction des actions définies pour la commande et du contexte actuel du robot, et exécuter l'action sélectionnée à la reconnaissance de la commande interactive,
**caractérisée en ce que** l'unité de commande (2) est configurée pour fournir un retour d'informations à l'utilisateur, avant la reconnaissance de la commande interactive, concernant l'action à exécuter pour la commande interactive dans le contexte actuel.

11. Unité de commande selon la revendication 10, dans laquelle la mémoire de données (4) comprend une pluralité de contextes spécifiés dans lesquels les actions définies peuvent être exécutées, et chacun des contextes spécifiés étant associé à au moins une des actions définies.

12. Unité de commande selon la revendication 11, dans laquelle au moins un des contextes spécifiés est associé à une pluralité des actions définies, et l'unité de commande (2) est configurée pour présenter une liste d'actions suggérées à exécuter pour la commande interactive en fonction des actions associées au contexte actuel du robot, recevoir une action sélectionnée par l'utilisateur pour le contexte actuel, mémoriser l'action sélectionnée pour le contexte actuel et sélectionner l'action sélectionnée par l'utilisateur à la reconnaissance de la commande interactive dans le contexte actuel.

13. Unité de commande selon la revendication 10 ou 11, dans laquelle l'unité de traitement (6) est configurée pour sélectionner l'action associée au contexte actuel.
